(19) Europäisches Patentamt
European Patent Office
Office européen des brevets

(11) **EP 0 613 019 B1**

(12) **FASCICULE DE BREVET EUROPEEN**

(45) Date de publication et mention
de la délivrance du brevet:
**15.09.1999 Bulletin 1999/37**

(51) Int Cl.⁶: **G01S 3/14**

(21) Numéro de dépôt: **94400375.5**

(22) Date de dépôt: **22.02.1994**

(54) **Antenne d'écartométrie pour radar monopulse**

Abweichungsantenne für Monopulsradar

Off-boresight antenna for monopulse radar

(84) Etats contractants désignés:
**DE FR GB IT**

(30) Priorité: **26.02.1993 FR 9302230**

(43) Date de publication de la demande:
**31.08.1994 Bulletin 1994/35**

(73) Titulaire: **THOMSON-CSF
75008 Paris (FR)**

(72) Inventeurs:
• **Pourailly, Jean-Louis
F-92402 Courbevoie Cédex (FR)**
• **Soule, Jean-Louis
F-92402 Courbevoie Cédex (FR)**
• **Gaudron, Michel
F-92402 Courbevoie Cédex (FR)**
• **Pages, Alain
F-92402 Courbevoie Cédex (FR)**

(74) Mandataire: **Benoit, Monique et al
Thomson-CSF Propriété Intellectuelle,
13, Avenue du Président Salvador Allende
94117 Arcueil Cédex (FR)**

(56) Documents cités:
EP-A- 0 106 494       DE-C- 2 702 114
FR-A- 800 433         US-A- 2 834 014
US-A- 3 824 595

## Description

La présente invention concerne une antenne d'écartométrie pour radar monopulse. Elle s'applique notamment aux antennes dont une fonction est de fournir des éléments pour la mesure d'angles plus petits que l'ouverture du faisceau d'antenne, ces angles définissant un écart entre la direction d'une cible détectée et la direction pointée par l'antenne.

L'écartométrie consistant dans la mesure des angles précités, pour situer avec précision une cible dans l'espace, plusieurs écartométries sont généralement utilisées, notamment en gisement et en site. Pour obtenir une écartométrie d'un signal détecté, il faut lui relier de façon bi-univoque un écart angulaire par rapport à la direction pointée par l'antenne. Pour cela, il faut établir une fonction de l'écart angulaire dans l'intervalle de mesure, cette fonction étant monotone. Elle est généralement croissante et impaire. Dans le cas de radars monopulses, où toutes les informations de position sont obtenues à la suite d'une seule impulsion d'émission, à cette première fonction associée à un premier circuit de réception généralement appelé voie différence ou d'écartométrie se combine une deuxième fonction paire associée à un deuxième circuit de réception généralement appelé voie somme. Cette deuxième fonction, en normalisant le signal fourni par la première fonction, monotone, permet d'obtenir un signal caractéristique de l'écart angulaire des cibles détectées de façon bi-univoque.

Un brevet allemand DE 27 02 114 décrit un système de mesure pour radar monopulse.

Des antennes connues permettent de réaliser des voies de réception nécessaires aux écartométries des radars monopulses, c'est le cas notamment des antennes à réflecteur ou à lentille passive et des antennes en réseaux avec ou sans balayage électronique.

Les antennes à réflecteur ou à lentille passive ont une direction de pointage fixe. Elles sont orientées mécaniquement en fonction des besoins, en général après traitement des informations fournies par l'écartométrie. Pour former les voies réception, il est possible par exemple d'utiliser deux cornets situés de part et d'autre du foyer de l'antenne. Les deux voies sont obtenues en faisant la somme et la différence des signaux issus des cornets, en utilisant par exemple les sorties orthogonales d'un té magique. Il est aussi possible d'utiliser un cornet multimode.

Un inconvénient de cette solution provient notamment du fait que les diagrammes d'antennes obtenus sont difficilement exploitables sans perfectionnement qui augmente la complexité et en conséquence le coût de l'antenne.

Les réseaux d'antennes avec ou sans balayage électronique sont utilisés notamment pour réaliser les ouvertures rayonnantes de dalles et de lentilles.

Dans les antennes dalle les signaux issus des éléments rayonnants, répartis sur un plan par exemple, sont collectés individuellement puis rassemblés par des combineurs qui forment les voies nécessaires. Les combineurs sont par exemple disposés en espalier ou suivant une matrice de Blass, réalisés en guide en ligne triplaques ou en lignes microrubans. Ces combineurs à plusieurs voies sont assez complexes et de réalisation délicate et coûteuse pour obtenir les qualités exigées par les antennes modernes.

Dans le cas des réseaux lentilles, les signaux issus des éléments rayonnants, répartis sur un plan par exemple, passent à travers des déphaseurs fixes ou électroniques, puis sont rayonnés vers des capteurs situés au voisinage d'un point focal. Les déphaseurs sont chargés de transformer l'onde localement plane reçue en onde sphérique centrée sur le point focal. Après cette transformation de l'onde reçue, il est possible d'utiliser les techniques réservées aux réflecteurs, à cornets multimodes ou non. Cependant une telle solution est encore complexe et coûteuse à mettre en oeuvre. De plus elle est encombrante à cause de l'épaisseur des lentilles qu'elle entraîne, notamment dans le cas d'une antenne à balayage électronique où tout ce qui sert au balayage électronique doit être dans cette épaisseur.

L'utilisation de moyens de fabrication de précision à commande numérique permet notamment la réalisation de guides à fentes ayant de très bonnes performances à faibles coûts de fabrication. Cependant, dans une antenne réalisée avec des guides à fentes, la pondération de l'ouverture est réalisée en couplant judicieusement les fentes au guide. Ce couplage est fixé une fois pour toute au moment de la fabrication et il est difficile d'implanter une deuxième voie, une deuxième pondération orthogonale pour créer les voies de réception paires et impaires nécessaires à l'établissement de l'écartométrie.

Le but de l'invention est de pallier les inconvénients précités, notamment en permettant d'établir une fonction d'écartométrie simple à mettre en oeuvre, destinée à des mesures d'écarts angulaires précises.

A cet effet, l'invention a pour objet une antenne d'écartométrie de radar monopulse telle que décrite par la revendication 1.

L'invention a pour principaux avantages qu'elle permet de situer de façon précise une cible dans l'espace, qu'elle permet de fournir des mesures d'angles plus petits que l'ouverture du faisceau d'antenne, qu'elle est adaptée à toutes les fréquences d'antennes et qu'elle est économique.

D'autres caractéristiques et avantages de l'invention apparaîtront à l'aide de la description qui suit faite en regard des dessins annexés qui représentent :

- la figure 1, un schéma de principe d'une antenne selon l'invention;
- la figure 2, un faisceau d'un panneau d'antenne ;
- la figure 3, une illustration de principe de fonctionnement d'une antenne selon l'invention ;
- la figure 4, un faisceau obtenu à partir des faisceaux de deux panneaux d'antenne ;

-　la figure 5, un mode de réalisation possible d'une antenne selon l'invention.

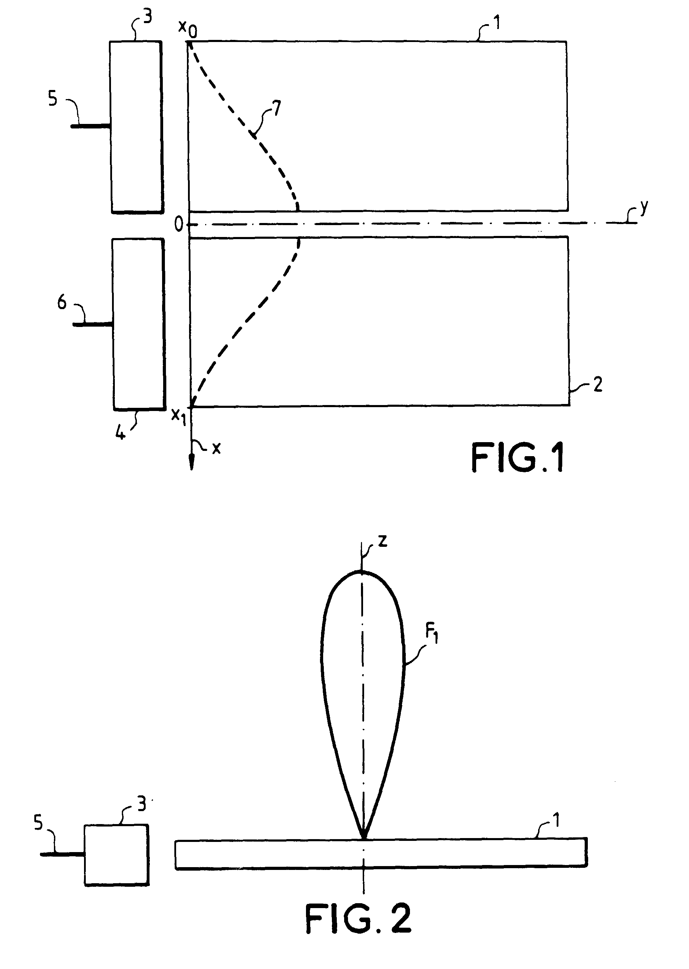

La figure 1, présente un schéma de principe d'une antenne vue de dessus selon l'invention. Elle comprend au moins deux panneaux rayonnant 1, 2. Ces deux panneaux ont par exemple les mêmes dimensions. Un premier panneau rayonnant 1 est couplé à des premiers moyens 3 de répartition de puissance et un deuxième panneau rayonnant 2 est couplé à des deuxièmes moyens 4 de répartition de puissance. Ces premiers 3 et deuxièmes 4 moyens de répartition de puissance sont reliés à une source hyperfréquence par des lignes d'alimentation 5, 6, des câbles coaxiaux ou des guides d'onde à section rectangulaire par exemple.

Une courbe 7 en trait discontinu représente l'allure de la répartition de puissance émise par ces deux panneaux rayonnant 1, 2. Un premier axe x étant défini dans le plan de la figure et confondu aux côtés des panneaux en regard des moyens 3, 4 de répartition de puissance, son origine $x_o$ étant dans un coin du premier panneau 1 opposé au deuxième panneau 2, la courbe 7 croît du point d'origine $x_o$ jusqu'au côté opposé du premier panneau 1. Elle est symétrique par rapport à un deuxième axe y situé entre les deux panneaux 1, 2 et équidistants de ceux-ci, de telle sorte qu'elle décroît du côté du deuxième panneau 2 contigu à ce deuxième axe y jusqu'à un point $x_1$ du premier axe x appartenant au côté opposé du deuxième panneau 2. Prise dans un repère ayant le point 0 d'intersection des deux axes x, y et constitué de ces deux axes x,y, la courbe 7 de répartition de puissance dans les panneaux 1, 2 représente une fonction paire.

Comme l'illustre la figure 2, chaque panneau possède son propre faisceau d'émission.

La figure 2 illustre le premier panneau 1 vu de côté avec son faisceau F1 sensiblement symétrique autour d'un troisième axe z perpendiculaire au plan du panneau 1 et coupant celui-ci en son milieu par exemple.

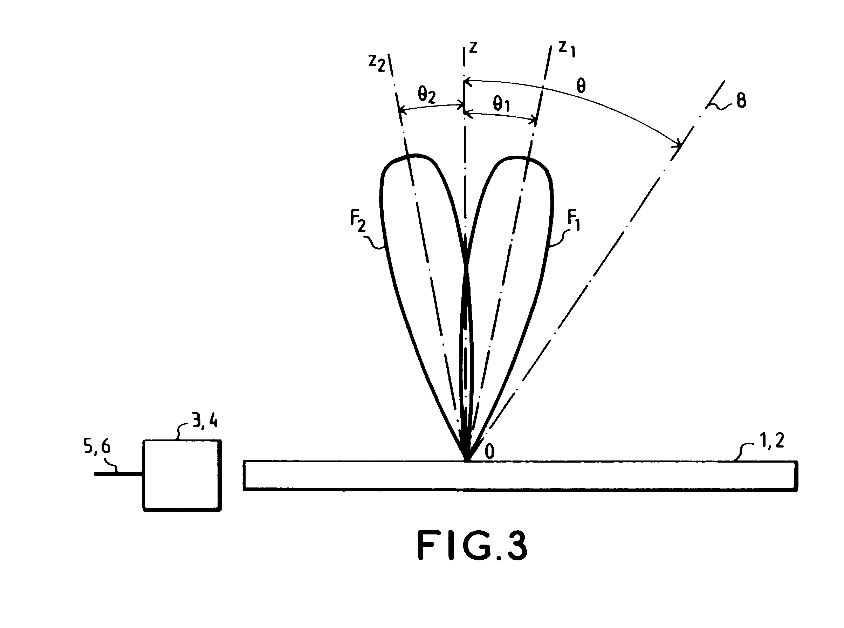

La figure 3, illustre le principe de fonctionnement d'une antenne selon l'invention. Les deux panneaux rayonnant 1, 2 sont vus de côté, le premier panneau 1 cachant par exemple le deuxième panneau 2. Les faisceaux F1, F2 des panneaux rayonnant 1, 2 sont orientés différemment. Le faisceau F1 du premier panneau 1 est orienté de telle façon que la projection de son axe de symétrie z1 fasse un premier angle de pointage θ1 avec la projection du troisième axe z précité et perpendiculaire au premier panneau 1 dans le plan de la figure. Le faisceau F2 du deuxième panneau 2 est orienté de telle façon que la projection de son axe de symétrie z2 fasse un deuxième angle de pointage avec la projection du troisième axe z dans le plan de la figure , les deux axes de symétrie z1, z2, faisant entre eux, dans le plan de la figure, la somme θ1+θ2 des deux angles précédents θ1, θ2. Ce plan de figure est un plan orthogonal au premier axe x et parallèle au deuxième axe y, il peut par exemple être appelé plan de symétrie de l'antenne.

Pour établir l'écartométrie, une fonction monotone de l'écart angulaire est réalisée dans l'intervalle de mesure. Cette fonction est par exemple construite à partir du rapport des puissances reçues par les deux panneaux.

Dans le cas où les faisceaux F1, F2 des panneaux rayonnant sont gaussiens, ce qui est souvent le cas, les puissances P1, P2 reçues dans une direction 8 dont la projection sur le plan de symétrie précité de l'antenne fait un angle θ avec la projection du troisième axe z dans ce même plan, s'expriment par les relations suivantes :

$$P1 = g1\, e^{a(\theta - \theta 1)^2} \qquad (1)$$

$$P2 = g2\, e^{a(\theta - \theta 2)^2} \qquad (2)$$

P1 et P2 étant respectivement les puissances reçues par le premier et le deuxième panneaux rayonnant, g1 et g2 étant respectivement les gains des premier et deuxième panneaux et a étant une constante liée aux dimensions et à l'illumination des panneaux rayonnant. Les angles θ1, θ2 sont les angles de pointage précités.

En prenant θ1=-θ2=θD, il vient :

$$\frac{P1}{P2} = \frac{g1}{g2}\, e^{4a\,\theta D\,\theta} \qquad (3)$$

ce rapport des puissances reçues par les deux panneau 1,2 dont les faisceaux sont orientés différemment, constitue bien une fonction monotone de l'écart angulaire θ d'une cible renvoyant un signal vers l'antenne. Cet écart angulaire peut être par exemple un écart en gisement, les angles θ1, θ2, θ en question étant des écarts entre les projections des directions sur le plan de symétrie de l'antenne, les directions étant prises à partir du point 0 d'intersection du premier axe x et du deuxième axe y.

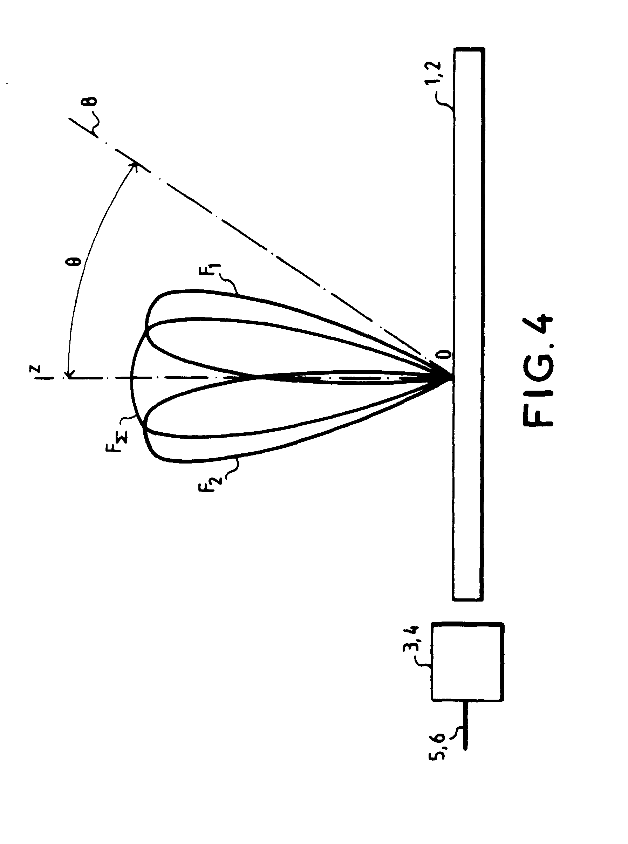

En fait, en prenant la répartition de puissance telle que décrite en regard de la figure 1, et les faisceaux F1, F2 des premier et deuxième panneaux ayant sensiblement le même centre de phase, il est alors possible, si l'écart angulaire entre les deux faisceaux F1, F2 n'est pas trop grand, de réaliser un faisceau somme $F_\Sigma$ illustré par la figure 4, qui est la somme des deux faisceaux F1, F2 précédents et où un signal reçu dans ce faisceau correspond à la somme des signaux reçus dans les deux faisceaux F1, F2 précédents, cette somme constituant une fonction paire du signal reçu en fonction de son angle θ de détection. Cet angle θ est l'angle entre la projection dans le plan de symétrie de l'antenne de la direction de la cible détectée prise à partir du point 0 d'intersection du premier axe x et du deuxième axe y et par exemple de la projection du troisième axe z dans ce même plan. Ce point 0 d'intersection constitue le centre de phase des deux faisceaux F1, F2.

La fonction paire obtenue, associée à la fonction monotone, rapport des puissances, permet de réaliser une écartométrie, en gisement par exemple.

Pour rendre la fonction monotone, établie dans la relation (3), plus simple d'exploitation, il est possible par exemple d'en prendre son logarithme. Dans ce cas la fonction n'est plus seulement le rapport des puissances P1, P2, mais le logarithme de ce rapport de puissance. La fonction monotone f de l'écart angulaire θ précité est alors établie par la relation suivante :

$$f(\theta) = [4a\,\theta D \log e]\theta + [\log g1 - \log g2] \qquad (4)$$

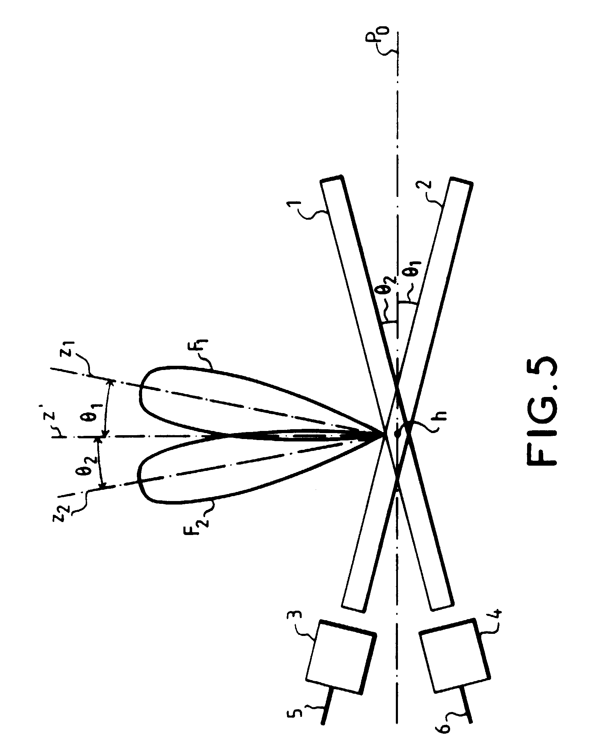

La figure 5 illustre un mode de réalisation possible de l'antenne selon l'invention. Les deux panneaux 1, 2 sont par exemple constitués de guides à fentes. La répartition de puissance dans les panneaux étant la même que précédemment, les axes de symétrie z1, z2 de leurs faisceaux F1, F2 étant perpendiculaires à leur plan, ou fixes par rapport à ces plans, les premier 1 et deuxième 2 panneaux rayonnant sont décalés respectivement d'un angle θ1, θ2 de part et d'autre de leur plan commun initial Po par rotation autour d'un axe h contenu dans ce plan et coupant par exemple les panneaux 1, 2 en leur milieu. Ces décalages angulaires permettent notamment de décaler les faisceaux F1, F2 entre eux, les décalages angulaires θ1, θ2 étant par exemple égaux à un angle donné θD. Les moyens de répartition 3, 4 des panneaux rayonnant 1, 2 sont par exemple eux aussi décalés de façon à rester en regard de leurs panneaux respectifs.

La figure 5 montre que le décalage des faisceaux F1, F2 peut être obtenu par rotation mécanique. Il est possible aussi de tourner les faisceaux électroniquement en prenant par exemple pour le premier panneau des guides à fentes ayant un pointage initial différent de celui pris par les guides du deuxième panneau. Pour cela, il suffit par exemple de prendre des pas entre les fentes des guides différents d'un panneau à l'autre. Il est possible par exemple de ne décaler de cette façon qu'un seul faisceau.

Dans le cas où les éléments rayonnant des panneaux ne sont plus des fentes alimentées par des guides, mais des éléments d'un autre type alimentés par un distributeur équiphase, en espalier par exemple, il est possible, pour le premier panneau de placer en sortie de ce distributeur des lignes dont les longueurs sont telles qu'une variation linéaire de phase soit établie le long du réseau des éléments rayonnant, cela permettant de décaler son faisceau dans un sens. Pour le deuxième panneau, une variation de pente inverse peut être établie pour décaler son faisceau dans le sens opposé, le distributeur restant le même.

L'invention peut par exemple, s'appliquer à toutes les antennes en réseaux que l'on peut partager en deux panneaux.

## Revendications

1. Antenne d'écartométrie de radar monopulse comportant au moins deux panneaux rayonnant (1, 2), un signal reçu par l'antenne étant vu par celle-ci sous un angle donné (θ), les faisceaux (F1, F2) des panneaux ayant le même centre de phase en gisement et étant orientés différemment, des moyens réalisant une fonction monotone de l'angle donné (θ) à partir du rapport de la puissance (P1) du signal reçue par le premier panneau sur sa puissance (P2) reçue par le deuxième panneau (2), caractérisé en ce que la puissance étant répartie dans les panneaux (1, 2) par des moyens de répartition (3, 4), un premier axe (x) étant confondu aux côtés des panneaux (1, 2) en regard des moyens de répartition (3, 4), un deuxième axe (y) étant situé entre les panneaux (1, 2) et équidistants de ceux-ci, la puissance croît d'un point ($x_o$) du premier axe (x) situé sur le côté du premier panneau (1) opposé au deuxième panneau (2) jusqu'au deuxième côté du premier panneau (1) en regard du deuxième panneau (2), la puissance étant répartie dans le deuxième panneau de telle sorte qu'elle soit symétrique sur l'ensemble des deux panneaux (1, 2), par rapport au deuxième axe (y), de facon à obtenir une fonction paire de l'angle (θ) en effectuant la somme des signaux reçus dans les faisceaux (F1, F2).

2. Antenne selon la revendication 1, caractérisée en ce que la fonction monotone est le logarithme du rapport des puissances (P1, P2).

3. Antenne selon l'une quelconque des revendications précédentes, caractérisé en ce que les panneaux (1, 2) sont décalés entre eux d'un angle donné (θ1, θ2) par rotation autour d'un axe (h) inclus dans ceux-ci.

4. Antenne selon la revendication 3, caractérisée en ce que les panneaux (1) sont constitués par des guides à fentes.

5. Antenne selon l'une quelconque des revendications 1 ou 2, caractérisée en ce que le décalage angulaire des faisceaux (F1, F2) est obtenu électroniquement.

6. Antenne selon l'une quelconque des revendications précédentes, caractérisée en ce que les panneaux (1, 2) étant constitués de guides à fentes, le pas entre les fentes sont différent d'un panneau (1) à l'autre (2).

## Patentansprüche

1. Antenne zur Messung der Winkelabweichung eines Ziels für Monopulse-Radarsysteme, mit mindestens zwei strahlenden Platten (1, 2), wobei ein von der Antenne empfangenes Signal von dieser unter einem bestimmten Winkel (θ), gesehen wird und die Strahlen (F1, F2) der Platten ein gemeinsames Phasenzentrum in Azimutrichtung besitzen und unterschiedlich ausgerichtet sind, mit Mitteln, die eine monotone Funktion des gegebenen Winkels (θ) ausgehend vom Verhältnis zwischen der Leistung (P1) des von der ersten Platte (1) empfangenen Signals und der Leistung (P2) des von der zweiten Platte (2) empfangenen Signals bildet, dadurch gekennzeichnet, daß die Leistung in den Platten (1, 2) durch Leistungsverteilermittel (3, 4) verteilt wird, daß eine erste Achse (x) mit den vor den Leistungsverteilermitteln (3, 4) liegenden Seiten der Platten (1, 2) zusammenfällt, daß eine zweite Achse (y) zwischen den Platten (1, 2) und in gleichen Abständen von diesen liegt und daß die Leistung von einem Punkt ($x_0$) auf der ersten Achse (x), der sich auf der der zweiten Platte (2) abgewandten Seite der ersten Platte (1) befindet, bis zu einer zweiten Seite der ersten Platte (1) nahe der zweiten Platte (2) zunimmt und daß die Leistung in der zweiten Platte so verteilt ist, daß sie symmetrisch über die Gesamtheit der beiden Platten (1, 2) bezüglich der zweiten Achse (y) verläuft, sodaß sich eine paarige Funktion des Winkels (θ) durch Bildung der Summe der in den beiden Strahlen (F1, F2) empfangenen Signale ergibt.

2. Antenne nach Anspruch 1, dadurch gekennzeichnet, daß die monotone Funktion der Logarithmus des Verhältnisses zwischen den Leistungen (P1, P2) ist.

3. Antenne nach einem beliebigen der vorstehenden Ansprüche, dadurch gekennzeichnet, daß die Platten (1, 2) zueinander um einen gegebenen Winkel (θ1, θ2) durch Drehung um eine Achse (h) versetzt sind, die in diesen verläuft.

4. Antenne nach Anspruch 3, dadurch gekennzeichnet, daß die Platten (1) Schlitzwellenleiter sind.

5. Antenne nach einem beliebigen der vorstehenden Ansprüche, dadurch gekennzeichnet, daß die Winkelverschiebung der Strahlen (F1, F2) elektronisch bewirkt wird.

6. Antenne nach einem beliebigen der vorstehenden Ansprüche, dadurch gekennzeichnet, daß die Platten (1, 2) von Schlitzwellenleitern gebildet werden und daß der Abstand zwischen den Schlitzen in den beiden Platten (1, 2) unterschiedlich gewählt ist.

## Claims

1. Deviation measurement antenna for monopulse radar comprising at least two radiating panels (1,2), a signal received by the antenna being seen by the latter at a given angle (θ), the beams (F1, F2) from the panels having the same phase centre in terms of bearing and being oriented differently, means effecting a monotonic function of the given angle (θ) on the basis of the ratio of the power (P1) of the signal received by the first panel to its power (P2) received by the second panel (2), characterized in that the power being distributed in the panels (1,2) by distribution means (3,4), a first axis (x) being merged with the sides of the panels (1,2) facing the distribution means (3,4), a second axis (y) being situated between the panels (1,2) and equidistant from them, the power increases from a point ($x_0$) of the first axis (x) situated on the side of the first panel (1) away from the second panel (2) up to the second side of the first panel (1) facing the second panel (2), the power being distributed in the second panel in such a way that it is symmetric over the assembly of the two panels (1, 2), with respect to the second axis (y), in such a way as to obtain an even function of the angle (θ) by summing the signals received in the beams (F1, F2).

2. Antenna according to Claim 1, characterized in that the monotonic function is the logarithm of the ratio of the powers (P1, P2).

3. Antenna according to any one of the preceding claims, characterized in that the panels (1,2) are mutually offset by a given angle (θ1, θ2) by rotation about an axis (h) included within them.

4. Antenna according to Claim 3, characterized in that the panels (1) are constituted by slotted guides.

5. Antenna according to either one of Claims 1 or 2, characterized in that the angular offset of the beams (F1, F2) is obtained electronically.

6. Antenna according to any one of the preceding claims, characterized in that, the panels (1, 2) being constituted by slotted guides, the spacing between the slots differs from one panel (1) to the other (2).

FIG.1

FIG. 2

FIG.3

EP 0 613 019 B1

FIG.4

EP 0 613 019 B1

FIG.5